# EUROPÄISCHE PATENTSCHRIFT

(11) **EP 3 669 739 B1**
(45) Veröffentlichungstag und Bekanntmachung des Hinweises auf die Patenterteilung: **03.11.2021**
(21) Anmeldenummer: 19213202.5
(22) Anmeldetag: 03.12.2019
(51) Int. Cl.: A47L 11/40

(54) **HAUSHALTSROBOTER UND VERFAHREN FÜR SEINE STEUERUNG**
DOMESTIC ROBOT AND METHOD FOR CONTROLLING THE SAME
ROBOT ÉLECTROMÉNAGER ET SON PROCÉDÉ DE COMMANDE

(30) Priorität: 21.12.2018 DE 102018222822
(43) Veröffentlichungstag der Anmeldung: 24.06.2020
(73) Patentinhaber: BSH Hausgeräte GmbH, 81739 München (DE)
(72) Erfinder: Hassfurter, Stefan, 96126 Maroldsweisach (DE); Markert, Maximilian, 97490 Poppenhausen (DE); Fremerey, Maximilian, 97616 Bad Neustadt/Saale (DE)

(56) Entgegenhaltungen:
- DE-A1-102016 213 920
- US-A1- 2007 050 937

## Beschreibung

Die Erfindung betrifft einen Haushaltsroboter, insbesondere einen Reinigungsroboter, der über eine Mehrzahl an austauschbaren Funktionsmodulen verfügt, sowie ein Steuerungsverfahren für einen derartigen Haushaltsroboter.

Die DE 10 2016 213 920 A1 beschreibt einen Haushaltsroboter umfassend eine Antriebseinrichtung, einen Energiespeicher, einen Sensor zur Abtastung eines Umfelds des Haushaltsroboters, eine Steuervorrichtung, die dazu eingerichtet ist, die Antriebseinrichtung auf der Basis eines Signals des Sensors mit Energie aus dem Energiespeicher anzusteuern, um eine vorbestimmte Fahrbewegung des Haushaltsroboters zu bewirken, und eine mechanische Schnittstelle, die dazu eingerichtet ist, ein Funktionsmodul mittels Formschluss relativ bewegungssicher mit dem Haushaltsroboter zu koppeln. Dabei umfasst die mechanische Schnittstelle eine Freigabeeinrichtung, die dazu eingerichtet ist, den Formschluss bezüglich einer Raumrichtung aufzuheben. Die Funktionsmodule sind dabei so beschaffen, dass sie jeweils eine ihnen zugeordnete Roboteraufgabe lösen können. Dennoch benötigt der Haushaltsroboter bei der Bewältigung komplexerer Aufgaben eine vergleichsweise lange Zeit zu deren Erfüllung.

Die US 2007 / 0 050 937 A1 offenbart ein Verfahren zum Betrieb eines Haushaltsroboters mit Funktionsmodulen umfassend die Schritte: - Bereitstellen einer Anzahl von Aufgaben für den Haushaltsroboter, - Unterteilen mindestens einer in eine Anzahl von Teilaufgaben, - Bestimmen der Funktionsmodule, die zur Abarbeitung der Teilaufgaben benötigt werden, - Festlegen der Reihenfolge der Abarbeitung der Teilaufgaben und/oder der Benutzung der Funktionsmodule, sowie - Abarbeiten der Teilaufgaben in der festgelegten Reihenfolge. Insbesondere erfolgt dabei dem Verfahren nach die Bearbeitung der Teilaufgabe durch eine durch den Benutzer vorher festgelegte Reihenfolge, aufgrund welcher anschließend eine jeweils für das entsprechende Funktionsmodul hinterlegte Bewegungsbahn ausgewählt wird, auf deren die Teilaufgabe abgearbeitet wird.

Der Erfindung liegt die Aufgabe zugrunde, ein verbessertes Verfahren zum Betrieb eines Haushaltsroboters sowie einen verbesserten Haushaltsroboter anzugeben.

Die Erfindung löst diese Aufgabe mittels der Gegenstände der unabhängigen Ansprüche. Die Unteransprüche geben bevorzugte Ausführungsformen wieder.

Das erfindungsgemäße Verfahren zum Betrieb eines solchen Haushaltsroboters, insbesondere ein Verfahren zur ganzheitlichen Reinigung von Räumen, umfasst die folgenden Schritte:
- Bereitstellen einer Anzahl von Aufgaben für den Haushaltsroboter. In diesem Schritt werden dem Haushaltsroboter benutzerseitig eine oder mehrere Aufgaben übermittelt, z. B. in Form einer Aktivierung von festgelegten und im Roboter abgespeicherten Befehlen oder in Form eines externen Aufgabendatensatzes umfassend die Anzahl von Aufgaben. Eine Aufgabe kann auf eine Wohnung bezogen beispielsweise die Reinigung des Küchenbodens sein, eine andere die Reinigung des Wohnzimmers. Die Aufgabe kann auch lauten, dass die gesamte Wohnung gereinigt werden soll.

Die Aufgabe(n) wird/werden in der Regel durch einen Benutzer vor- bzw. eingegeben, kann/können jedoch auch durch ein übergeordnetes Rechensystem, z. B. über eine beispielsweise drahtlose Datenverbindung, oder durch den Haushaltsroboter selbst bereitgestellt werden. Beispielsweise kann ein Benutzer festlegen, dass der Haushaltsroboter zu einem bestimmten Zeitpunkt z. B. regelmäßig eine bestimmte Anzahl von Aufgaben abarbeiten soll, z. B. die Räume einer Wohnung reinigen. Diese Information kann im Speicher des Haushaltsroboters abgespeichert und die Bereitstellung durch eine Zeitschaltung aktiviert werden. In diesem Falle würde die aktuelle Bereitstellung der Aufgaben durch den Roboter selber erfolgen.
- Unterteilen mindestens einer Aufgabe, bevorzugt jeder Aufgabe, in eine Anzahl von Teilaufgaben. Die Unterteilung einer Aufgabe in Teilaufgaben führt zu einer ersten, in sich logischen Reihenfolge von Teilaufgaben, in der die jeweilige Aufgabe grundsätzlich abgearbeitet werden kann. Die zur Erfüllung der Aufgaben notwendigen Teilaufgaben können in der Steuerung des Haushaltsroboters hinterlegt sein. Es kann gegebenenfalls zuvor eine Segmentierung von Aufgaben in Aufgabensegmente erfolgen. Beispielsweise kann auf den Befehl des Benutzers: "Säubere die Wohnung" eine Segmentierung in die Reinigung einzelner Räume als Aufgabensegmente erfolgen und ein Aufgabensegment - Säuberung eines Raums - dann weiter in Teilaufgaben unterteilt werden. Für die Reinigung des kompletten Küchenbodens können die diesbezüglichen Teilaufgaben z. B. "Staubsaugen", "Nassreinigen", "Ränder und Kanten reinigen" sowie "Luftreinigung" lauten.
- Bestimmen der benötigten Funktionsmodule, die zur Abarbeitung der Teilaufgaben benötigt werden. Jeder Teilaufgabe ist in der Regel ein Funktionsmodul zugeordnet bzw. die Teilaufgaben sind bevorzugt nach den Leistungen der Funktionsmodule segmentiert. Ausgehend von den ermittelten Teilaufgaben bestimmt der Haushaltsroboter die für die Erfüllung aller Teilaufgaben erforderlichen Funktionsmodule. Im obigen Beispiel "Reinigen des kompletten Küchenbodens" sind dies ein Staubsaugmodul, ein Wischmodul, ein Ecken- und Randreinigungsmodul sowie ein Luftreinigungsmodul.
- Prozessdefinition: Festlegen der Reihenfolge der Abarbeitung der Teilaufgaben und/oder der Benutzung der Funktionsmodule. Die Reihenfolge der Abarbeitung von Teilaufgaben kann für jede Aufgabe quasi statisch vorbestimmt sein. Vorbestimmte Abläufe von Teilaufgaben können in einem Datenspeicher des Haushaltsroboters vorliegen, beispielsweise, dass jedem "Ränder- und Kantenreinigen" ein "Staubsaugen" folgt. Alternativ kann die Reihenfolge der Abarbeitung von Teilaufgaben dynamisch nach entsprechenden Vorgaben bestimmt werden. Dazu können die Teilaufgaben als Bausteine im Datenspeicher des Haushaltsroboters vorliegen, die in Abhängigkeit der Vorgaben aneinandergereiht werden. Beispielsweise kann aufgrund einer Zeitvorgabe das "Ränder- und Kantenreinigen" vor dem "Staubsaugen" entfallen. Alternativ kann auch das Reinigen eines Teilbereichs eines Raums als Vorgabe zu demselben Entfall führen.

Erfindungsgemäß wird im Rahmen dieser Festlegung:
a) ermittelt, ob eine Ruhezeit innerhalb einer Teilaufgabe und/oder zwischen zwei Teilaufgaben vorliegt. Es wird also geprüft, ob die Teilaufgabe eine Ruhezeit bedingt, entweder innerhalb ihrer Abarbeitung oder an ihrem Anfang oder Ende. Beispielsweise sollte vor dem Einsatz eines Nasswischmoduls eine Ruhezeit eingelegt werden, damit sich durch vorangegangene Aktivitäten wie zum Beispiel durch das Staubsaugen aufgewirbelter Staub auf dem Boden absetzen kann. Nach einem Nasswischvorgang kann eine Ruhezeit zur Trocknung notwendig sein.
b) Danach wird geprüft, ob während einer festgestellten Ruhezeit eine andere Teilaufgabe ganz oder zumindest teilweise erledigt werden kann. Im positiven Fall einer vorhandenen Ruhezeit werden die Reihenfolge der Teilaufgaben und damit der Einsatz der benötigten Funktionsmodule entsprechend festgelegt. Beispielsweise kann innerhalb der Ruhezeit, die ein Nasswischmodul eingangs oder abschließend erfordert, ein anderer Raum - evtl. auch nur teilweise - gewischt oder gesaugt werden. Ggf. können auch mehrere Teilaufgaben ganz oder teilweise abgearbeitet werden, wozu auch ein Transport von nicht mehr benötigten Funktionsmodulen an einen Ort, wo sie benötigt oder gelagert werden, gehören kann.

Kann keine Ruhezeit festgestellt werden oder kann in einer festgestellten Ruhezeit keine Teilaufgabe ganz oder teilweise abgearbeitet werden, kann es bei der anfangs aus der Unterteilung der Aufgabe ermittelten Reihenfolge der Teilaufgaben bleiben.
- Abarbeiten der Teilaufgaben gemäß der festgelegten Reihenfolge. Mit den Teilaufgaben sind im Grunde die Arbeitsschritte bekannt, welche unternommen werden müssen, um die Aufgaben zu lösen. Selbstverständlich können bei der Erledigung der Teilaufgaben vorbekannte Routinen zur Steuerung eines Roboters in einem Raum zum Einsatz kommen, die beispielsweise gewährleisten, dass der Roboter nicht an Wände stößt, sich nicht verirrt oder eine vorbestimmte Bodenfläche im Wesentlichen lückenfrei überfährt.

Ein erfindungsgemäßer Haushaltsroboter, insbesondere ein Reinigungsroboter, umfasst eine autonom bewegliche Basiseinheit und eine Halteeinheit zur Kopplung des Haushaltsroboters mit einem Funktionsmodul. Der Roboter umfasst eine Steuervorrichtung, insbesondere in der Basiseinheit, die dazu ausgelegt ist, das erfindungsgemäße Verfahren zur Steuerung des Haushaltsroboters auszuführen.

Die Basiseinheit umfasst typischerweise eine Antriebseinrichtung, einen Energiespeicher, einen Orientierungssensor zum Abtasten eines Umfelds des Haushaltsroboters und die vorgenannte Steuervorrichtung, wobei sie auch als separate Einheit in dem Haushaltsroboter vorhanden sein kann. Die Steuervorrichtung ist dazu ausgelegt, die Antriebseinrichtung auf der Basis eines Signals des Sensors mit Energie aus dem Energiespeicher anzusteuern, um eine bestimmte Fahrbewegung des Haushaltsroboters zu bewirken.

Die Halteeinheit ist eine mechanische Schnittstelle, die dazu eingerichtet ist, ein Funktionsmodul mittels Formschluss bewegungssicher mit dem Haushaltsroboter zu koppeln. Dabei umfasst die mechanische Schnittstelle eine Freigabeeinrichtung, die dazu eingerichtet ist, den Formschluss bezüglich einer Raumrichtung aufzuheben. Bevorzugt ist die Halteeinheit in der Basiseinheit integriert oder zumindest fest mit ihr verbunden. Jedes Funktionsmodul ist seinerseits so beschaffen, dass es von der Halteeinheit gehalten und von der Basiseinheit zumindest an einen Arbeitsplatz bewegt werden kann.

Die Halteeinheit ist bevorzugt zusätzlich mit einer elektrischen Schnittstelle zur energetischen Versorgung eines Funktionsmoduls und/oder mit einer Datenschnittstelle für eine Steuerung eines Funktionsmoduls und/oder Datenaustausch mit einem Funktionsmodul ausgestattet. Die Funktionsmodule benötigen damit keine eigene Energieversorgung und/oder Steuerelektronik.

Die Funktionsmodule sind regelmäßig dafür ausgelegt, jeweils eine ihnen zugeordnete Roboteraufgabe lösen zu können. Dabei übt ein Funktionsmodul vorzugsweise in Kooperation mit der Basiseinheit, also während es in der Halteeinheit an der Basiseinheit angekoppelt ist und verfahren wird, seine Funktion aus, wie z. B. eine Saugeinheit oder eine Wischeinheit. Alternativ, nämlich je nach Aufgabe, kann ein Funktionsmodul an eine bestimmte Position verbracht und dort, mechanisch getrennt von der Basiseinheit, eine Aufgabe erfüllen, wie z. B. ein Luftreinigungsmodul. Dann kann die Basiseinheit währenddessen ein anderes Funktionsmodul betätigen, wodurch sich ggf. Arbeitszeit einsparen lässt. Dazu kann das erfindungsgemäße Verfahren ermitteln, ob eine parallele Abarbeitung von zwei oder mehr Aufgaben oder Teilaufgaben durchgeführt werden kann. Im positiven Falle, insbesondere wenn sich dadurch eine Zeitersparnis erreichen lässt, kann die parallele Abarbeitung in die Festlegung der Reihenfolge der Teilaufgaben aufgenommen werden.

Einzelne Funktionsmodule können also auch zumindest energetisch autark gestaltet sein, z. B. indem sie zumindest eine eigene Energieversorgung, aber auch ggf. Bewegungselemente zur Ausführung ihrer Arbeit aufweisen, z. B. einen Elektromotor zum Betrieb einer rotierenden Bürste. Alternativ kann auch ein durch die Basiseinheit bereitgestelltes Bewegungselement die Aufgabe des Antriebs erfüllen, z. B. eine rotierende Welle, die in eine Kupplung am Bewegungselement eingekuppelt werden kann. Wenn die Funktionselemente an sich unbeweglich ausgestaltet sind, also ohne die Funktion einer autarken Fortbewegung, können sie konstruktiv erheblich unaufwändiger und leichter ausfallen. Die Mehrzahl der Funktionsmodule kann also stationär bzw. unbeweglich ausgebildet, aber ggf. auch ohne den Roboter einsatzfähig sein.

Zwischen den Funktionsmodulen und dem Haushaltsroboter kann, wie oben angedeutet, bevorzugt eine Datenverbindung oder zumindest eine Steuerverbindung bestehen. Die Datenverbindung kann z. B. eine bekannte Datenschnittstelle sein, über die Steuerdaten an eine Steuereinheit des Funktionsmoduls übersendet werden, welche die Elektromotoren des Funktionsmoduls gemäß der Steuerdaten steuert. Eine Steuerverbindung kann z. B. eine Kontaktstelle zur direkten Ansteuerung von Elektromotoren des Funktionsmoduls sein. Damit bietet sich eine flexible Steuerungsmöglichkeit der Funktion des Funktionsmoduls durch die Basiseinheit.

Gemäß einer bevorzugten Ausführungsform umfasst der Haushaltsroboter eine Datenbank. Sie kann Teilaufgaben in Form von Datenobjekten, z. B. in Form von Anweisungen, Steuerbefehlen, Programmen oder Algorithmen etc. umfassen. Vorzugsweise sind alle Teilaufgaben darin abgelegt, damit bei Vorliegen einer Aufgabe die zugehörigen Teilaufgaben aus der Datenbank entnommen werden können. Bevorzugt umfasst die Datenbank für die jeweiligen Teilaufgaben zusätzlich eine Zuordnung zu den entsprechenden Funktionsmodulen und/oder Informationen zur Reihenfolge der Durchführung der betreffenden Teilaufgaben. Es können vorbestimmte Abläufe von Teilaufgaben in der Datenbank vorliegen, die mit Merkmalen von Aufgaben verknüpft sind. So kann sehr einfach eine Reihenfolge von Teilaufgaben ermittelt werden. Alternativ oder zusätzlich können einzelne Teilaufgaben in der Datenbank mit Vorgaben verknüpft sein. Damit kann eine Reihenfolge von Teilaufgaben anhand von Vorgaben ermittelt werden.

Gemäß einer bevorzugten Ausführungsform umfasst das Verfahren die folgenden zusätzlichen Schritte:
- Bestimmen eines Vorbereitungsbereichs außerhalb, aber in der Nähe eines durch eine Aufgabe festgelegten Arbeitsbereichs. Der Vorbereitungsbereich kann beispielsweise vor oder im Bereich des Eingangs eines Raumes liegen, der den Arbeitsbereich definiert. Der Bereich des Eingangs kann als Bereich definiert sein, der beispielsweise nicht weiter als fünf Meter oder zwei Meter von dem betreffenden Eingang entfernt ist. Weil die Definition des Arbeitsbereichs je nach Ausgestaltung der Aufgabe nicht an einen Raum gebunden sein muss, sondern zum Beispiel nur einen Teilbereich des Raums betreffen kann, kann der Vorbereitungsbereich auch zusammen mit dem Arbeitsbereich innerhalb desselben Raums liegen.
- Transport der benötigten Funktionsmodule in den Vorbereitungsbereich im Rahmen des Abarbeitens der Teilaufgaben.

Gemäß einer bevorzugten Ausführungsform kann im Rahmen der Prozessdefinition bei mehreren möglichen Reihungen von Teilaufgaben z. B. nach dem Zufallsprinzip eine erste Reihung gewählt und die Zeit zum Abarbeiten der ersten Reihung gemessen werden. Ein anderes Mal kann eine zweite Reihung gewählt und deren Arbeitszeit gemessen werden, bis die Arbeitszeiten aller möglichen Reihungen bekannt sind. Anschließend kann diejenige Reihung gewählt werden, bei der die kürzeste Arbeitszeit benötigt wurde. Auf diese Weise kann das Verfahren zeitlich optimiert werden.

Bevorzugt kann der Haushaltsroboter über eine permanente Karte seiner Umgebung verfügen, z. B. im Falle eines Reinigungsroboters über einen Raumplan des Haushaltes, in welchem er agieren soll. Dies ist vorteilhaft, um den jeweils aktuellen Standort der austauschbaren Funktionsmodule innerhalb des Haushalts zu erfassen. Zudem kann ein Benutzer innerhalb der Karte Lagermöglichkeiten für die Funktionsmodule angeben.

Gemäß einer bevorzugten Ausführungsform umfasst der Haushaltsroboter und bevorzugt dessen Steuereinheit ein System, welches basierend auf den Prinzipien des maschinellen Lernens trainiert werden kann. Alternativ oder zusätzlich umfasst der Haushaltsroboter eine Datenschnittstelle zur Herstellung einer Datenverbindung mit einem Rechensystem, z. B. über WLAN/Mobilfunknetz und/oder Internet, welches wiederum ein System umfasst, das basierend auf den Prinzipien des maschinellen Lernens trainiert werden kann.

Dadurch können Arbeitsabläufe analysiert und verbessert werden. Der Haushaltsroboter erhält dadurch die Fähigkeit, seine Arbeitsleistung selbstständig immer weiter zu verbessern.

Bevorzugt umfasst der Haushaltsroboter ein Kommunikationsmodul, welches für eine gegenseitige Kommunikation mit bzw. zumindest für eine einseitige Informationsübermittlung zu einem Benutzersystem ausgelegt ist, z. B. zu einem Computer oder Mobilfunkgerät. Damit können Statusinformationen des Haushaltsroboters an den Benutzer gesendet werden, insbesondere über dessen Zustand oder Arbeitsfortschritt. Dazu kann der Stand der aktuellen, der noch ausstehenden oder der bereits abgearbeiteten Teilaufgaben gehören. Dies hat den Vorteil, dass ein Benutzer auch bei großem räumlichem Abstand stets über die Arbeit des Haushaltsroboters informiert sein und ggf. in dessen Arbeit eingreifen kann.

Ein geeignetes Einsatzgebiet des Roboters ist die Reinigung von Räumen im Haushaltsbereich, z. B. ihrer Fußböden, aber auch ihrer Luft. Das erfindungsgemäße Prinzip kann darüber hinaus für weitere Arbeitsprozesse Anwendung finden, bei welchen ein Roboter mehr als ein Funktionsmodul benötigt. Es sei angemerkt, dass der Begriff "Haushaltsroboter" seinen Einsatzort nicht begrenzt. So ist die Erfindung auch auf den Einsatz des Roboters in Büro-, Lager-, oder Industrieräumlichkeiten oder in einer Gartenumgebung gerichtet.

Die Erfindung ermöglicht insbesondere eine automatisierte ganzheitliche Reinigung von Räumen durch ein robotisches System. Zudem werden durch das erfindungsgemäße Verfahren unnötige Wege des Haushaltsroboters aufgrund deren Zusammenfassung vermieden. Dadurch werden elektrische Energie und Zeit eingespart. Das Verfahren ermöglicht insbesondere eine sinnvolle Positionierung der Funktionsmodule, z. B. innerhalb eines Haushalts, sowie eine Einsatzplanung für die benötigten Funktionsmodule. Durch die effektivere Nutzung der Funktionsmodule ergibt sich insbesondere eine Erhöhung der Lebensdauer der Verbindung Haushaltsroboter-Funktionsmodule. Ein Vorteil der Erfindung ist somit, dass die Arbeitsleistung eines Haushaltsroboters infolge eines kontrolliert ablaufenden Multitaskings verbessert werden kann. Ein Vorteil der Erfindung besteht also darin, dass der Haushaltsroboter die ihm zugeordneten Funktionsmodule aufgabenangepasst in vorteilhafter Reihenfolge einsetzt.

Das Prinzip der Erfindung wird im Folgenden anhand einer Zeichnung beispielshalber noch näher erläutert. In der Zeichnung zeigen:
- Figur 1:: einen schematischen Aufbau einer bevorzugten Ausführungsform eines erfindungsgemäßen Haushaltsroboters,
- Figur 2:: ein Blockschaltbild zum Ablauf des erfindungsgemäßen Verfahrens,
- Figur 3:: einen Grundriss einer Wohnung als Ausgangssituation,
- Figuren 4 bis 8:: Darstellungen von Zwischenzuständen bei der Ausführung des erfindungsgemäßen Verfahrens.

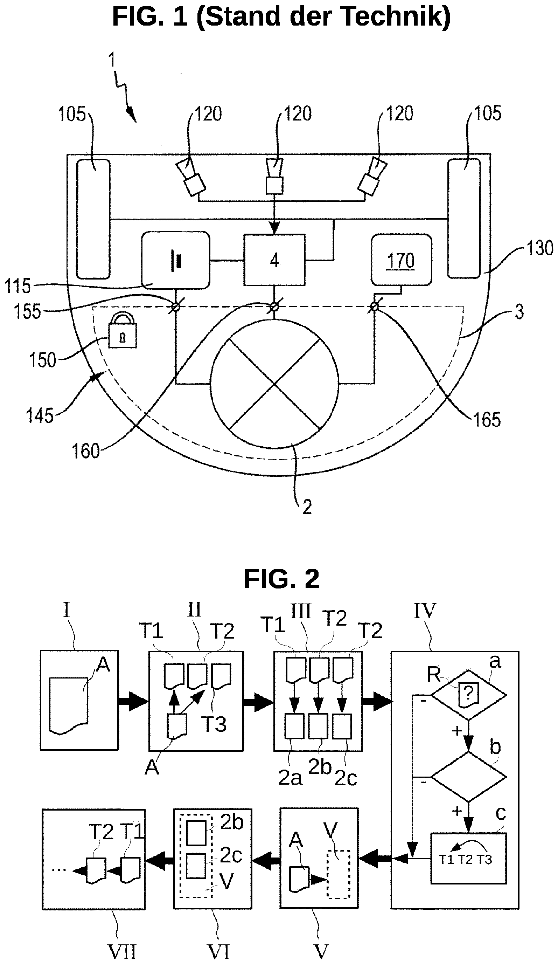

Figur 1 zeigt eine schematische Darstellung eines Haushaltsroboters 1, wie er in seiner Grundform in der DE 10 2016 213 920 A1 beschrieben wurde. Der Haushaltsroboter 1 umfasst eine Basiseinheit 5 und ein austauschbares Funktionsmodul 2. Die Basiseinheit 5 enthält eine Antriebseinrichtung 105 zur Bewegung des Haushaltsroboters 1 über eine Bodenfläche, einen Energiespeicher 115, einen oder mehrere Sensoren 120 zum Abtasten eines Umfelds des Haushaltsroboters 1, eine Steuervorrichtung 4 und ein Chassis 130 zur Aufnahme der Komponenten des Haushaltsroboters 1. Die Steuervorrichtung 4 umfasst einen programmierbaren Mikrocomputer oder Mikrocontroller und ist dazu eingerichtet, eine Bewegung des Haushaltsroboters 1 über die Bodenfläche zu steuern. Dazu kann die Steuervorrichtung 4 insbesondere Sensorsignale eines der Sensoren 120 aufnehmen, verarbeiten und in dessen Abhängigkeit die Antriebseinrichtung 105 mit Energie aus dem Energiespeicher 115 versorgen. Der Energiespeicher 115 kann insbesondere ein wieder aufladbarer Energiespeicher, beispielsweise in Form eines Akkupacks, sein.

Die Basiseinheit 5 umfasst eine Halteeinheit 3 zur Aufnahme eines Funktionsmoduls 2. Um das Funktionsmodul 2 mit dem Haushaltsroboter 1 mechanisch zu koppeln, ist eine mechanische Schnittstelle 145 vorgesehen. Außerdem ist eine Freigabeeinrichtung 150 vorgesehen, sodass das Funktionsmodul 2 bevorzugt verschiebungs- und drehsicher an der Basiseinheit 5 bzw. in der Halteeinheit 3 gehalten ist, solange die Freigabeeinrichtung 150 nicht betätigt ist. Nach Betätigung der Freigabeeinrichtung 150 kann das Funktionsmodul 2, insbesondere durch eine vorbestimmte Bewegung, vom Haushaltsroboter 1 getrennt werden. Das Funktionsmodul 2 ist hier im halbrunden Bereich des Haushaltsroboters 1 angeordnet. Im Folgenden wird aus Gründen einer übersichtlicheren Darstellung angenommen, dass das Funktionsmodul 2 an der geraden Seite des Haushaltsroboters 1 von diesem aufgenommen werden kann.

Es ist eine Energieschnittstelle 155, eine Datenschnittstelle 160 oder eine Materialschnittstelle 165 zwischen dem Haushaltsroboter 1 und dem Funktionsmodul 2 vorgesehen. Weiter sind die Schnittstellen 155 bis 165 derart mit der mechanischen Schnittstelle 145 gekoppelt, dass ein möglichst automatisches Verbinden oder Trennen erfolgt, wenn die mechanische Schnittstelle 145 verbunden bzw. getrennt wird. Die Materialschnittstelle 165 kann insbesondere zu einem Behälter 170 des Haushaltsroboters 1 führen, der beispielsweise Wasser oder Reinigungsmittel bereithält.

Der Haushaltsroboter 1 kann noch weitere Elemente aufweisen, insbesondere eine drahtlose Schnittstelle zur Verbindung mit einem Datennetzwerk. Außerdem kann beispielsweise eine Beleuchtungseinrichtung oder ein Aktor vorgesehen sein, etwa eine Kamera oder ein Greifer, um eine vom Funktionsmodul 2 unabhängige Grundfunktion des Haushaltsroboters 1 zur realisieren. Das Funktionsmodul 2 kann über die Schnittstellen 145, 155, 160 oder 165 mit dem Haushaltsroboter 1 interagieren, um eine vorbestimmte Aufgabe zu erfüllen. Beispielsweise kann das Funktionsmodul 2 über die Datenschnittstelle 160 die Anforderung übermitteln, eine vorbestimmte Position anzufahren oder ein vorbestimmtes Fahrmanöver durchzuführen.

Im Unterschied zum Stand der Technik ist die Steuervorrichtung 4 zur Durchführung eines erfindungsgemäßen Steuerverfahrens für den Haushaltsroboter 1 ausgestaltet.

Figur 2 zeigt ein Blockschaltbild zum Ablauf des erfindungsgemäßen Verfahrens. In Schritt I wird eine Aufgabe A für den Haushaltsroboter 1 bereitgestellt

In Schritt II erfolgt eine Unterteilung der Aufgabe A in Teilaufgaben T1, T2, T3. Damit liegen die Teilaufgaben T1, T2, T3 grundsätzlich bereits in einer abarbeitungsfähigen Reihenfolge vor.

In Schritt III werden Funktionsmodule 2 bestimmt, die zur Abarbeitung der Teilaufgaben T1, T2, T3 benötigt werden.

In Schritt IV erfolgt eine Festlegung der Abarbeitung der Teilaufgaben T1, T2, T3 und/oder der Benutzung der Funktionsmodule 2, wobei im Rahmen dieser Festlegung ermittelt wird,
(a) ob eine Ruhezeit R innerhalb einer Teilaufgabe T1, T2, T3 und/oder zwischen zwei Teilaufgaben T1, T2, T3 vorliegt. Da eine Ruhezeit einzukalkulieren ist, wird geprüft, (b) ob während dieser Ruhezeit R eine andere Teilaufgabe T1, T2, T3 oder ein Teil dieser erledigt werden kann. Im positiven Fall der Prüfung wird (c) die Reihenfolge der Teilaufgaben T1, T2, T3 und/oder der benötigten Funktionsmodule 2 so festgelegt, dass die andere Teilaufgabe T3 oder ein Teil der anderen Teilaufgabe T3 innerhalb der Ruhezeit R abgearbeitet wird.

Ohne das Vorliegen einer Ruhezeit oder ohne die Möglichkeit, während der Ruhezeit eine andere Teilaufgabe zu erledigen, wird die zunächst in Schritt II ermittelte Reihenfolge der Teilaufgaben T1, T2, T3 unverändert beibehalten.

In Schritt V erfolgt eine Bestimmung eines Vorbereitungsbereichs V in der Nähe eines durch die Aufgabe A festgelegten Arbeitsbereichs AB,

In Schritt VI werden die benötigten Funktionsmodule 2 in den Vorbereitungsbereich V transportiert.

In Schritt VII erfolgt ein Abarbeiten der Teilaufgaben T1, T2, T3 gemäß der festgelegten Reihenfolge.

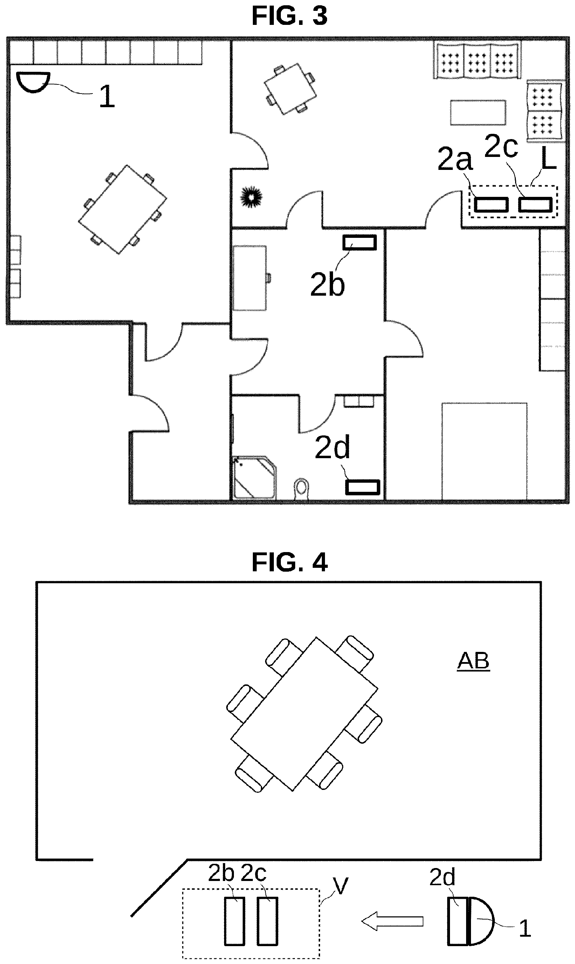

Figur 3 zeigt einen Grundriss eines Haushalts (Wohnung) als Ausgangssituation des Haushaltsroboters 1. Der Haushaltsroboter 1 steht links oben in einer Küche. Er kann dort beispielsweise in einer Ladestation stehen.

In einem Wohnzimmer recht oben befinden sich zwei Funktionsmodule 2, nämlich ein Randreinigungsmodul 2a und ein Staubsaugmodul 2c in einem Lagerbereich L. In einem zentralen Flur steht ein Luftreinigungsmodul 2b in einer Ecke und wird zur Reinigung der Luft betrieben, weil der Flur als Durchgangszimmer oft frequentiert wird.

In einem mittleren unteren Zimmer, einem Bad, steht ein Wischmodul 2d zum Nassreinigen, das nach seiner Säuberung dort zum Trocknen steht. Der Bereich, in dem das Wischmodul 2d steht, könnte auch ein weiterer Lagerbereich sein.

Figur 4 zeigt einen Zwischenzustand bei Ausführung des erfindungsgemäßen Verfahrens, während der Haushaltsroboter 1 die benötigten Funktionsmodule 2 in einer Vorbereitungszone V vor einem künftigen Arbeitsbereich AB, nämlich einem Zimmer mit einem Hartfußboden platziert. Ein Staubsaugmodul 2c und ein Luftreinigungsmodul 2b befinden sich bereits in der Vorbereitungszone V und ein Wischmodul 2d wird gerade in die Vorbereitungszone V verbracht. Die Vorbereitungszone V liegt außerhalb des Zimmers und im oder in der Nähe seinen(s) Eingangsbereich(s), damit die dort zwischengelagerten Funktionsmodule 2b, 2c, 2d einerseits einen Reinigungsvorgang im Arbeitsbereich AB nicht stören, andererseits aber schnell verfügbar sind. Danach oder währenddessen wird die Reihenfolge bestimmt, in welcher der Haushaltsroboter 1 die Funktionsmodule 2 benutzen soll. Wurde die Reihenfolge bereits vorher ermittelt, können die Funktionsmodule 2 so platziert werden, dass kein später verwendetes Funktionsmodul 2 den Zugang zu einem früher verwendeten Funktionsmodul 2 blockiert. Außerdem kann entschieden werden, dass der Haushaltsroboter 1 das zuerst zu verwendende Funktionsmodul 2a als letztes holt, da er es nicht erst in der Vorbereitungszone V platzieren muss, sondern sofort mit der Reinigung beginnen kann.

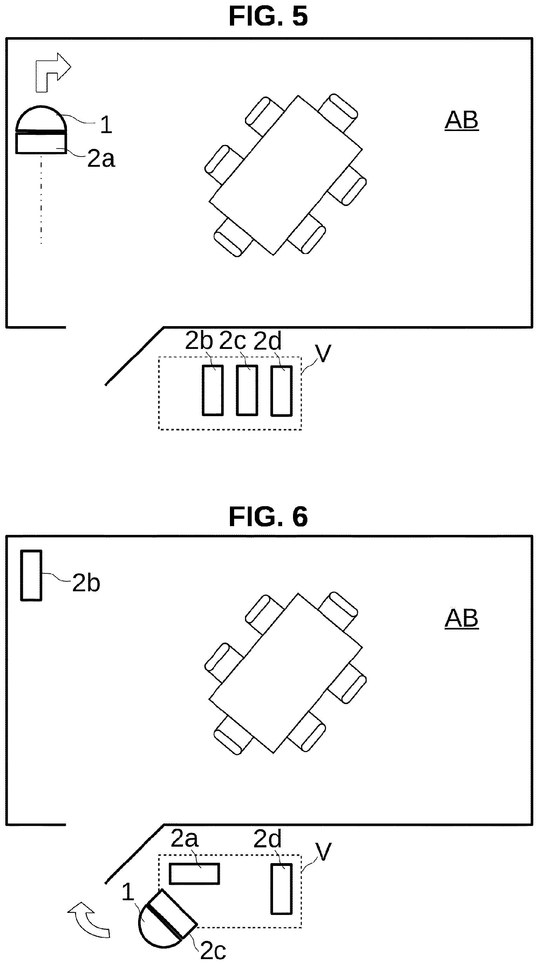

Gemäß Figur 5 nimmt der Haushaltsroboter 1 als erstes Funktionsmodul 2 das Randreinigungsmodul 2a aus dem Vorbereitungsbereich V auf (oder er hat es als letztes geholt und beginnt sofort). Nun werden Ecken, Kanten und Ränder des Raumes gereinigt. Danach wird das Randreinigungsmodul 2a in dem Vorbereitungsbereich V abgestellt und das Luftreinigungsmodul 2b aufgenommen.

In Figur 6 hat der Haushaltsroboter 1 das Luftreinigungsmodul 2b an eine bereits gereinigte Stelle am Rand abgestellt, um den Staub aufzunehmen, der beim Randreinigen bereits in die Luft gelangt und im weiteren Verlauf des Verfahrens, z. B. beim nächsten Schritt, dem Staubsaugen, noch in die Luft gelangen wird. Anschließend fährt der Haushaltsroboter 1 zurück in den Vorbereitungsbereich V und nimmt das Staubsaugmodul 2c auf.

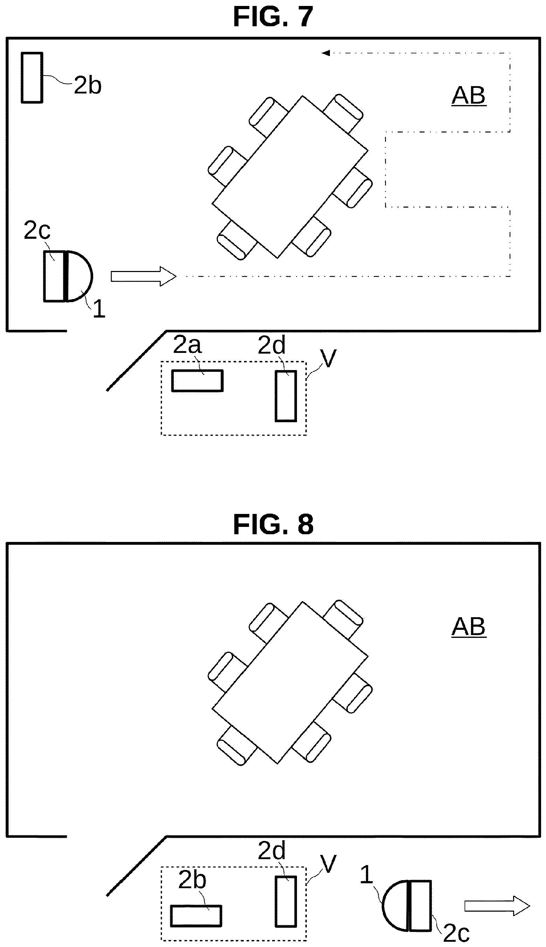

Gemäß Figur 7 hat der Haushaltsroboter 1 das Staubsaugmodul 2c aufgenommen. Er saugt den Boden ab, während das Luftreinigungsmodul 2b weiterhin die Luft von Staub reinigt, der bei Staubsaugen aufgewirbelt wird. Hierdurch wird der Boden für den Nasswischvorgang vom groben Schmutz und Staub befreit.

Auch wenn der aufgewirbelte Staub vom Luftreinigungsmodul 2b zum Teil aus der Luft aufgenommen wird, so setzt sich doch ein anderer, nicht erfasster Teil auf dem Boden ab. Da dies einige Zeit dauert, ergibt sich nach dem Staubsaugen eine Zeitspanne, während der der Haushaltsroboter 1 mit der Reinigung des Bodens im Arbeitsbereich AB pausieren muss. Das Zeitintervall der Pause sollte so groß gewählt werden, dass sich zumindest größere Staubpartikel, welche durch den Reinigungsvorgang in die Luft gewirbelt worden sind, wieder auf dem Boden absetzen können. Allerdings wird diese Wartezeit sinnvoll genutzt.

In Figur 8 nutzt der Haushaltsroboter 1 die Ruhezeit, indem er die nicht mehr benötigten Funktionsmodule 2, nämlich das Staubsaugmodul 2c und das Randreinigungsmodul 2a, aus dem Vorbereitungsbereich V in den für sie vorgesehenen Lagerbereich L (Fig. 3) zurückbringt. Zudem können in dieser Ruhezeit R in Abhängigkeit der jeweiligen Aufgabe A andere Teilaufgaben T1, T2, T3 in anderen Bereichen des Haushalts erledigt werden, z. B. andere Räume mit dem Wischmodul 2d gesäubert werden.

Ist die definierte Wartezeit vorbei, bringt der Haushaltsroboter 1 das Luftreinigungsmodul 2b aus dem Raum heraus, nämlich zurück in den Vorbereitungsbereich V. Der Haushaltsroboter 1 kann das Luftreinigungsmodul 2b auch in dem Lagerbereich L oder einem anderen Ort (z. B. einem anderen zu reinigenden Raum) abstellen.

Anschließend nimmt der Haushaltsroboter 1 aus dem Vorbereitungsbereich V das letzte verbliebene Funktionsmodul 2, das Wischmodul 2d zum Nassreinigen, auf und beginnt mit dem Wischvorgang (ohne Figur). Nach Abschluss des Wischvorgangs wird das Wischmodul 2d in den Lagerbereich L oder einen Ort verbracht, an dem es benötigt wird.

Da es sich bei dem oben detailliert beschriebenen Verfahren und dem Roboter jeweils um ein Beispiel handelt, können sie in üblicher Weise vom Fachmann in einem weiten Umfang modifiziert werden, ohne den Bereich der Erfindung zu verlassen. Insbesondere können auch die konkreten Ausgestaltungen der Funktionsmodule entsprechend den zu erledigenden Aufgaben in anderer Form als in der hier beschriebenen erfolgen. Ebenso kann der Haushaltsroboter an sich in einer anderen Form ausgestaltet werden, wenn dies aus Platzgründen bzw. gestalterischen Gründen notwendig ist. Weiterhin schließt die Verwendung der unbestimmten Artikel "ein" bzw. "eine" nicht aus, dass die betreffenden Merkmale auch mehrmals oder mehrfach vorhanden sein können.

### Bezugszeichenliste

- 1: Haushaltsroboter
- 2: Funktionsmodul
- 2a: Randreinigungsmodul
- 2b: Luftreinigungsmodul
- 2c: Staubsaugmodul
- 2d: Wischmodul
- 3: Halteeinheit
- 4: Steuervorrichtung
- 5: Basiseinheit
- 105: Antriebseinrichtung
- 115: Energiespeicher
- 120: Sensor
- 130: Chassis
- 145: Schnittstelle
- 150: Freigabeeinrichtung
- 155: Energieschnittstelle
- 160: Datenschnittstelle
- 165: Materialschnittstelle
- 170: Behälter

- A: Aufgabe
- AB: Arbeitsbereich
- L: Lagerbereich
- T1, T2, T3: Teilaufgabe
- R: Ruhezeit
- V: Vorbereitungsbereich

## Patentansprüche

1. Verfahren zum Betrieb eines Haushaltsroboters (1) mit Funktionsmodulen (2) umfassend die Schritte:
- Bereitstellen einer Anzahl von Aufgaben (A) für den Haushaltsroboter (1),
- Unterteilen mindestens einer Aufgabe (A) in eine Anzahl von Teilaufgaben (T1, T2, T3),
- Bestimmen der Funktionsmodule (2), die zur Abarbeitung der Teilaufgaben (T1, T2, T3) benötigt werden,
- Festlegen der Reihenfolge der Abarbeitung der Teilaufgaben (T1, T2, T3) und/oder der Benutzung der Funktionsmodule (2), wobei
a) ermittelt wird, ob eine Ruhezeit (R) innerhalb einer Teilaufgabe (T1, T2, T3) und/oder zwischen zwei Teilaufgaben (T1, T2, T3) vorliegt und
b) geprüft wird, ob während einer festgestellten Ruhezeit (R) eine andere Teilaufgabe (T1, T2, T3) zumindest teilweise erledigt werden kann, woraufhin die Reihenfolge der Teilaufgaben (T1, T2, T3) und/oder der benötigten Funktionsmodule (2) so festgelegt wird, dass die andere Teilaufgabe (T1, T2, T3) innerhalb der Ruhezeit (R) zumindest teilweise abgearbeitet wird,
- Abarbeiten der Teilaufgaben (T1, T2, T3) in der festgelegten Reihenfolge.

2. Verfahren nach dem vorangehenden Anspruch, **gekennzeichnet durch** die zusätzlichen Schritte:
- Bestimmen eines Vorbereitungsbereichs (V) außerhalb, aber in der Nähe eines durch eine Aufgabe (A) festgelegten Arbeitsbereichs (AB),
- Transport der benötigten Funktionsmodule (2) in den Vorbereitungsbereich (V) im Rahmen des Abarbeitens der Teilaufgaben (T1, T2, T3).

3. Verfahren nach einem der vorangehenden Ansprüche, **dadurch gekennzeichnet, dass** eine Kommunikation mit einem Benutzersystem erfolgt, bevorzugt mit einem Computer oder einem Mobilfunkgerät des Benutzers, wobei im Rahmen der Kommunikation bevorzugt Statusinformationen an den Benutzer gesendet werden, insbesondere über den Zustand des Haushaltsroboters (1) oder über den Stand der Teilaufgaben (T1, T2, T3).

4. Verfahren nach einem der vorangehenden Ansprüche, **dadurch gekennzeichnet, dass** ermittelt wird, ob eine parallele Abarbeitung von zwei oder mehr Aufgaben oder Teilaufgaben (T1, T2, T3) durchgeführt werden kann, und dass im positiven Falle die parallele Abarbeitung in die Festlegung der Reihenfolge der Teilaufgaben (T1, T2, T3) aufgenommen wird.

5. Verfahren nach einem der vorangehenden Ansprüche, **dadurch gekennzeichnet, dass** bei mehreren möglichen Reihungen von Teilaufgaben (T1, T2, T3) eine erste Reihung gewählt wird und die Zeit zum Abarbeiten der ersten Reihung gemessen wird, wobei bei mehrfachem Auftauchen dieser Konstellation von Teilaufgaben (T1, T2, T3) unterschiedliche Reihungen gewählt und deren Arbeitszeit gemessen werden und nach Durchlaufen einer Anzahl von unterschiedlichen Reihungen für zukünftige Male diejenige mit der günstigsten Arbeitszeit gewählt wird.

6. Haushaltsroboter (1) umfassend eine autonom bewegliche Basiseinheit (5), eine Halteeinheit (3) zur Kopplung des Haushaltsroboters (1) mit einem Funktionsmodul (2) und eine Steuervorrichtung (4), die dazu ausgelegt ist, ein Verfahren nach einem der vorangehenden Ansprüche zur Steuerung des Haushaltsroboters (1) auszuführen.

7. Haushaltsroboter nach Anspruch 6, **gekennzeichnet durch** ein Kommunikationsmodul, welches für eine Kommunikation mit einem Benutzerkommunikationssystem ausgelegt ist.

8. Haushaltsroboter nach Anspruch 6 oder 7, **gekennzeichnet durch** eine Datenbank, in der zu einer Menge von Aufgaben die zu deren Lösung notwendigen Teilaufgaben (T1, T2, T3) enthalten sind, bevorzugt zusammen mit den dazu benötigten Funktionsmodulen (2) und/oder der Reihenfolge der Durchführung der betreffenden Teilaufgaben (T1, T2, T3).

9. Haushaltsroboter nach Anspruch 7 oder 8, **gekennzeichnet durch** eine permanente Karte seiner Umgebung, insbesondere über einen Raumplan, wobei der Haushaltsroboter (1) bevorzugt dazu ausgestaltet ist, dass innerhalb der Karte durch einen Benutzer Lagerbereiche (L) für die Funktionsmodule (2) angegeben werden können.

10. Haushaltsroboter nach einem der Ansprüche 6 bis 9, **dadurch gekennzeichnet, dass** die Steuereinheit (4) ein System umfasst, welches basierend auf den Prinzipien des maschinellen Lernens trainiert werden kann.

## Claims

1. Method for operating a household robot (1) with functional modules (2), comprising the steps:
- providing a number of tasks (A) for the household robot (1),
- dividing at least one task (A) into a number of subtasks (T1, T2, T3),
- determining the functional modules (2) that are required in order to execute the subtasks (T1, T2, T3),
- specifying the order of execution of the subtasks (T1, T2, T3) and/or the use of the functional modules (2), wherein
a) it is ascertained whether an idle time (R) is present within a subtask (T1, T2, T3) and/or between two subtasks (T1, T2, T3) and
b) it is checked whether, during an established idle time (R), another subtask (T1, T2, T3) can be at least partially completed, whereupon the order of the subtasks (T1, T2, T3) and/or the required functional modules (2) is specified such that the other subtask (T1, T2, T3) is at least partially executed within the idle time (R),
- executing the subtasks (T1, T2, T3) in the specified order.

2. Method according to the preceding claim, **characterised by** the additional steps:
- determining a preparation region (V) outside of a working region (AB) specified by a task (A), but in the vicinity thereof,
- transporting the required functional modules (2) into the preparation region (V) as part of the execution of the subtasks (T1, T2, T3).

3. Method according to one of the preceding claims, **characterised in that** communication with a user system takes place, preferably using a computer or a mobile telephony device of the user, wherein as part of the communication status information is preferably sent to the user, in particular regarding the status of the household robot (1) or regarding the status of the subtasks (T1, T2, T3).

4. Method according to one of the preceding claims, **characterised in that** it is ascertained whether a parallel execution of two or more tasks or subtasks (T1, T2, T3) can be performed, and that in the positive case the parallel execution is incorporated into the specifying of the order of the subtasks (T1, T2, T3).

5. Method according to one of the preceding claims, **characterised in that** in the event of multiple possible sequences of subtasks (T1, T2, T3) a first sequence is chosen and the time for execution of the first sequence is measured, wherein, if this configuration of subtasks (T1, T2, T3) appears multiple times, different sequences are chosen and the working times thereof are measured, and after running through a number of different sequences the one with the most favourable working time is chosen for future instances.

6. Household robot (1) comprising an autonomously mobile base unit (5), a holding unit (3) for coupling the household robot (1) to a functional module (2) and a control apparatus (4) which is designed to carry out a method according to one of the preceding claims for controlling the household robot (1).

7. Household robot according to claim 6, **characterised by** a communication module, which is designed for communication with a user communication system.

8. Household robot according to claim 6 or 7, **characterised by** a database in which, for a set of tasks, the subtasks (T1, T2, T3) required for the achievement thereof are contained, preferably together with the functional modules (2) required therefor and/or the order of performing the subtasks (T1, T2, T3) in question.

9. Household robot according to claim 7 or 8, **characterised by** a permanent map of its surroundings, in particular via a room layout, wherein the household robot (1) is preferably equipped such that storage regions (L) for the functional modules (2) can be indicated within the map by a user.

10. Household robot according to one of claims 6 to 9, **characterised in that** the control unit (4) comprises a system which can be trained on the basis of the principles of machine learning.

## Revendications

1. Procédé pour faire fonctionner un robot ménager (1) disposant de modules fonctionnels (2), comprenant les étapes suivantes :
- mise à disposition d'un certain nombre de tâches (A) pour le robot ménager (1),
- subdivision d'au moins une tâche (A) en un nombre de tâches partielles (T1, T2, T3),
- détermination des modules fonctionnels (2) qui sont nécessaires à l'exécution des tâches partielles (T1, T2, T3),
- définition de la séquence d'exécution des tâches partielles (T1, T2, T3) et/ou de l'utilisation des modules fonctionnels (2), dans laquelle :
a) il est déterminé, si un temps de repos (R) est présent dans une tâche partielle (T1,T2, T3) et/ou entre deux tâches partielles (T1, T2, T3), et
b) il est vérifié, si pendant un temps de repos (R) défini, une autre tâche partielle (T1, T2, T3) peut être exécutée au moins en partie, à la suite de quoi la séquence des tâches partielles (T1, T2, T3) et/ou des modules fonctionnels nécessaires (2) est définie de manière à ce que l'autre tâche partielle (T1, T2, T3) soit exécutée au moins en partie dans l'intervalle du temps de repos (R),
- exécution des tâches partielles (T1, T2, T3) dans la séquence définie.

2. Procédé selon la revendication précédente, **caractérisé par** les étapes complémentaires suivantes :
- détermination d'une zone de préparation (V) à l'extérieur, mais à proximité d'une zone de travail (AB) définie par une tâche (A),
- transport des modules fonctionnels (2) nécessaires dans la zone de préparation (V) dans le cadre de l'exécution des tâches partielles (T1, T2, T3).

3. Procédé selon l'une des revendications précédentes, **caractérisé en ce qu'**une communication s'effectue avec un système d'utilisateur, de préférence avec un ordinateur ou un téléphone mobile de l'utilisateur, dans lequel, dans le cadre de la communication, de préférence des informations d'état sont envoyées à l'utilisateur, en particulier sur l'état du robot ménager (1) ou sur l'état d'avancement des tâches partielles (T1, T2, T3).

4. Procédé selon l'une des revendications précédentes, **caractérisé en ce qu'**il est déterminé si une exécution parallèle de deux ou plusieurs tâches ou tâches partielles (T1, T2, T3) peut être effectuée, et **en ce que**, dans le cas positif, l'exécution parallèle est intégrée dans la définition de la séquence des tâches partielles (T1, T2, T3).

5. Procédé selon l'une des revendications précédentes, **caractérisé en ce qu'**en présence de plusieurs séquences possibles de tâches partielles (T1, T2, T3), une première séquence est sélectionnée et le temps d'exécution de la première séquence est mesuré, dans lequel, en cas d'émergence multiple de cette constellation de tâches partielles (T1, T2, T3), différentes séquences sont sélectionnées et leur temps de travail est mesuré, et après déroulement d'un certain nombre de différentes séquences, celle présentant le temps de travail le plus avantageux est sélectionnée pour des fois futures.

6. Robot ménager (1) comprenant une unité de base (5) mobile de façon autonome, une unité de maintien (3) pour accoupler le robot ménager (1) à un module fonctionnel (2) et un dispositif de commande (4), qui est conçu pour exécuter un procédé selon l'une des revendications précédentes pour commander le robot ménager (1).

7. Robot ménager selon la revendication 6, **caractérisé par** un module de communication, qui est conçu pour une communication avec un système de communication d'utilisateur.

8. Robot ménager selon la revendication 6 ou 7, **caractérisé par** une base de données, dans laquelle, pour un nombre de tâches, les tâches partielles (T1, T2, T3) nécessaires à leur résolution sont incluses, de préférence avec les modules fonctionnels (2) nécessaires et/ou la séquence d'exécution des tâches partielles concernées (T1, T2, T3).

9. Robot ménager selon la revendication 7 ou 8, **caractérisé par** une carte permanente de son environnement, en particulier par le biais d'un plan spatial, dans lequel le robot ménager (1) est conçu de préférence de manière à ce que des endroits d'entreposage (L) pour les modules fonctionnels (2) puissent être indiqués sur la carte par un utilisateur.

10. Robot ménager selon l'une des revendications 6 à 9, **caractérisé en ce que** l'unité de commande (4) comprend un système, qui peut être formé sur la base du principe de l'apprentissage machine.
